# EUROPEAN PATENT APPLICATION

(11) **EP 4 056 050 A1**
(43) Date of publication of application: **14.09.2022**
(21) Application number: 22160789.8
(22) Date of filing: 08.03.2022
(51) Int. Cl.: A23L 13/20, A23L 13/30, A23L 13/40, A23L 13/00

(54) **METHOD FOR OBTAINING DRY BROTH FROM ORGANIC BOVINE BONES**

(30) Priority: 09.03.2021 LT 2021007
(71) Applicant: MB "Kulagenas", 03108 Vilnius (LT)
(72) Inventor: Viskelis, Pranas, Domeikavos k. (LT); Viskelis, Jonas, Kaunas (LT); Streimikyte, Paulina, Kaunas (LT); Praspaliauskas, Deivydas, Vilnius (LT); Savickaite, Milda, Vilnius (LT)
(74) Representative: Klimaitiene, Otilija

(57) **Abstract**

The invention belongs to the food industry. The aim of the invention is to ensure the production of an organic product from organic products of animal origin, preserving its nutritional properties and improving its taste properties. Anatomical parts of organic cattle (knee joints, thighs, palate or oesophagus) are used as organic raw material for obtaining dry broth, which are separated by filtration of the liquid broth after boiling in water for at least 28 hours. The filtered liquid broth is evaporated and is poured into lyophilisation forms and instantly cooled. For lyophilisation, it is placed on lyophilisation racks and refrigerated at a temperature of not more than -18 °C and for at least 24 hours. The lyophilisation racks with frozen broth are then placed in a lyophiliser with an adjustable system of lyophilisation parameters. The lyophilisation process is carried out for at least 72 hours at low condenser temperature. The lyophilized broth is ground into a powder. The moisture content of the dry broth does not exceed 5%. Natural dried and crushed spices are added to the dry broth powder to improve the taste properties.

## Description

### Field of invention

The invention relates to the food industry, namely to methods for obtaining broths using products of animal origin.

### Background art

Company's FOOD STUDIO TALLINN OU̅ Ahtri 6, 10151 Tallinn, Estonia) natural long-cooking broth from raw materials of animal origin - chicken, beef, pork bones are well-known. Raw materials of animal origin are first roasted, then boiled for 12 h in water at a temperature not exceeding 91 °C. The cooked broth in packages is cooled to +2 - +8 °C. It uses instant cooling technology. Onions, carrots, ginger, lemongrass, and hot peppers are added to give a specific taste.

The method for obtaining beef bone broth is known, in which the bones are placed in a perforated container in a tank with water and, after heating at 70 - 90 °C, they are washed and drained. Then drinking water is added and heated at 110 - 130 °C. After heating at this temperature, the broth is heated for a while at a temperature of 70 - 90 °C, thus increasing the concentration of the resulting broth to the specified. When the required concentration of the broth is reached, it is cooled. (See patent WO2011132815A (WIPO PCT), TPKK: A 47 J 27/004, publ. 2011).

Beef bone broth obtained in a known way is not organic, as organic products have not been used to obtain it. In addition, it does not have good taste properties.

### Description of the invention

The aim of the invention is to ensure the production of an organic product from organic products of animal origin, preserving its nutritional properties and improving its taste properties.

To achieve the object of the invention, dry broth is obtained from organic raw material: 32-35 % by weight as organic raw material of organically reared bovine anatomical parts, 0.35 - 0.40 % by weight of organic apple cider vinegar with 5 % acidity and the remaining amount of water (H₂O) is used, and primarily in a container with water (H₂O) 32 - 35 % by weight of anatomical parts of bovine animals are boiled for at least two hours at a temperature not exceeding 101 °C by skimming off the top layer of unnecessary material, then 0.35 - 0.40 % by weight of organic apple cider vinegar 5 % acidity is added and boiled for at least 28 hours at a constant temperature of 93 °C, the broth is then filtered by separating the anatomical parts of the bovine bones and evaporated by stirring in evaporating vessels with an automatic stirring function for at least 10 hours at an evaporation temperature of 99 °C, the evaporated broth is poured into lyophilisation forms in a layer of 1.5 - 2.5 cm and instantly cooled to 0 °C in a shock freezer, the refrigerated broth is vacuumed in a vacuum pack for storage at a low temperature of 0 to +4 °C until the lyophilisation process, the broth is placed on a lyophilisation rack without vacuum packaging in a layer not thicker than 2.5 cm and refrigerated at a temperature not exceeding -18 °C for at least 24 hours, lyophilisation racks with frozen broth are placed in the lyophiliser for at least 72 hours and lyophilized at a condenser the temperature of which is from -60 °C to -85 °C and a vacuum of at least 20 Pa, after lyophilisation, the broth is removed from the lyophilisation racks and is ground into a powder.

Also, to achieve the object of the invention, the anatomical parts of cattle are baked in a convection oven for 30-40 minutes before being boiled in water 170-190 °C.

Also, the anatomical parts of organically reared cattle to achieve the object of the invention that are used are: 35-45% by weight of knee joints, 35 - 45 % by weight of femurs and 10-20 % by weight of palate or oesophagus.

Also for the purpose of the invention, the dry broth powder is mixed to a uniform mass with natural dried and crushed spices, using 100 g of dry broth powder and spices optionally: oregano *(Origanum)* 1.0 - 3.0 g, dill *(Anethum)* 1.0 - 3.0 g, parsley *(Petroselinum)* 3.0 - 4.0 g, black pepper *(Piper nigrum)* 2.0 - 4.0 g, white pepper *(Piper nigrum)* 2.0 - 4.0 g, green pepper *(Piper nigrum)* 2.0 - 4.0 g, red pepper (pepper genus *Capsicum* plants) 2.0 - 4.0 g, garlic *(Allium sativum)* 3.0 - 5.0 g, bay leaves *(Laurus nobilis)* 1.0 - 3.0 g, aniseed goat herb *(Pimpinella anisum)* 1.0 - 3.0 g, cinnamon *(Cinnamomum)* 1.0 - 3.0 g, passion fruit *(Passiflora)* berries 1.0 - 3.0 g, ginger *(Zingiber)* 1.0 - 3.0 g, turmeric *(Curcuma)* 1.0 - 3.0 g.

Also, to achieve the object of the invention, 1.0 to 1.5 g of citric acid is added to 100 g of dry broth powder: naturally dried (dehydrated), derived from citrus plants (*Citroideae*) fruit, in granular or organic form (C₆H₈O₇) in the form of white bulk crystals.

In addition, for the purpose of the invention, no more than 15 g of, optionally, edible rock salt (NaCI), sea salt (in the form of crystals or flakes), Himalayan salt is added to 100 g of dry broth powder.

Organic farm raw material (anatomical parts of cattle) is used: knee joints, thighs, palate or oesophagus, free from chemicals (antibiotics, hormones) and feed without synthetic additives. Organic farm animals are provided with good quality feed and proper veterinary care. Also, another organic ingredient to make dry broth is used, which is a natural fermented vinegar - apple cider vinegar with 5% acidity, produced by natural fermentation from healthy, ripe apples. Organic apple cider vinegar contains substances found in apples, such as vitamins (A, B1, B2, B6, B12, C, E, and beta-carotene), minerals: potassium, sodium, magnesium, zinc, polyphenols and antioxidants. The following spices are used to express the taste of dry broth and provide additional nutritional properties: oregano, dill, parsley, black, white, green and red (legume) pepper, garlic, bay leaves, aniseed, cinnamon, passion fruit, ginger, turmeric, citric acid, edible rock salt (NaCI), sea salt in the form of crystals or flakes) and Himalayan salt. Oregano *(Origanum)* - a spice plant containing essential oils, fat in branches and flowers. Dill *(Anethum)* - a spice plant valued for essential oils, vitamins, carotene, flavonoids, minerals. Parsley *(Petroselinum)* - a spice plant containing essential oils, vitamins and minerals. It is used to flavour food and get good and bright taste. Pepper - universal spice containing essential oil, piperine, chavicin, protein, manganese, copper, vitamins C, K. Black, white and green peppers are the fruit of the same black plant *(Piper nigrum).* Their different colour and taste depend on the degree of ripeness, the time of collection and the method of processing. Black pepper has a spicy taste. White pepper has a brighter aroma and is not as spicy as black. Green peppers are extremely fragrant, with a mild and refreshing greenish taste. Red pepper is made from plants of the genus *Capsicum* of the potato family (*Solanaceae*)*,* that is, from dried and crushed legumes containing essential oils, vitamins A, B₁, B₂, B₆, E, antioxidants and minerals: potassium, iron, magnesium, phosphorus. It is used to give food a spicy taste. Garlic *(Allium sativum)* bulbous vegetable rich in protein, fat, carbohydrates, minerals, vitamin B, C, essential oils. It is used as a spice. Laurel (*Laurus*) dried leaves *(Laurus nobilis)* - are a classic spice that contains essential oils and gives foods a pleasant taste and aroma. Aniseed goat herb *(Pimpinella anisum)* is a spice plant that contains essential oils. The seeds of this plant are used as a spice. Cinnamon *(Cinnamomum)* a spice plant with antibacterial properties and healthy minerals: calcium, magnesium, iron, manganese and vitamins A, C, E, K. Dried, shredded bark is used as a food preservative and spice, giving food a special aroma and taste. Passionflower *(Passiflora)* a spice plant. Passion fruit - multi-seeded berries with juicy pulp, containing valuable substances - flavonoids, phytosterols, phosphorus, iron, sodium, vitamin A, beta-carotene. Dried passion fruit is used to flavour foods and give them the scent of exotic fruits. Ginger *(Zingiber)* rootstocks are not only medicinal, but also a spice containing essential oils, fibre, nitrogen compounds, vitamins C, PP, minerals: sodium, iron, magnesium. Dried crushed ginger is used in food because of its valuable properties and the aromatic smell and spicy taste it gives. Turmeric *(Curcuma)* is a spice plant, its roots contain curcumin (active ingredient), essential oils, proteins, vitamins C, E, K, potassium, calcium, copper, iron, zinc. Used as a universal spice, giving food a pepper-like aroma and spicy taste. The purpose of citric acid is to regulate the acidity of foods and enhance the taste. Citric acid: natural dried (dehydrated) obtained from citrus plants (*Citroideae*)*,* fruit rich in vitamins C, B₁, B₂, flavonoids, various minerals, and organic acid (C₆H₈O₇) is used as white bulk crystalline material (monohydrate) permitted for use in organic products. Edible rock salt (NaCI), sea salt (in the form of crystals and flakes) and Himalayan salt are important nutrients. Sea salt contains sodium chloride (NaCI), minerals found: potassium, magnesium, fluorine. Himalayan salt contains minerals: magnesium, calcium, potassium, copper, iron. Salt is used to flavour food, giving it a salty taste.

Optimal limits for the content of organic ingredients for the production of dry broth, determined by tests and studies. In order for the product to be of high quality and nutritious, to retain as many valuable nutrients as possible, the optimal lyophilisation mode was chosen for the production of dry broth during the technological process, as it is not the same for all products.

### Examples

The invention is illustrated by the following examples.

*The first example.* Organic raw material was used to obtain dry broth: 32 % in weight of anatomical parts of organically reared cattle (35 % of the knee joints, 45 % of the femurs, 20 % of the palate), 0.4 % by weight 5 % acidity of organic apple cider vinegar and water (H₂O) - the remaining quantity. The container was filled with 32 % by weight of bovine anatomical parts, 67.6 % water and boiled for at least two hours at a maximum temperature of 101 °C, thus preserving its nutritional properties. The resulting top layer of unnecessary substances was skimmed from the broth. Thereafter, after adding 0.4 % by weight of organic apple cider vinegar of 5 % acidity, the broth was boiled for at least 28 hours at a constant temperature of 93 °C. The cooked broth was filtered using a filtration device and thus separated the anatomical parts of the cattle - the bones. The filtered broth is evaporated by stirring in special evaporating vessels with automatic mixing function for at least 10 h at an evaporating temperature of 99 °C. The weight of the evaporated broth was 6% of the weight of the filtered broth. For lyophilisation (freeze-drying), the evaporated broth was poured into lyophilisation moulds in a layer 1.5 - 2.5 cm thick and placed in a shock freezer for instant cooling to 0 °C. To keep the cooled broth at a low temperature of 0 - 4 °C until the lyophilisation process, it was vacuumed in the package using a vacuum device. The broth was removed from the vacuum pack before being placed on lyophilisation racks. The broth was placed on a lyophilisation rack in a layer no thicker than 2.5 cm and refrigerated at a temperature of not more than -18 ° C for at least 24 hours to allow the broth to freeze well. After that, the lyophilisation racks with well-frozen broth were placed in a lyophiliser with an adjustable system of lyophilisation parameters (temperature, pressure, retention time of these parameters of the lyophilised product). The lyophilisation process was carried out for at least 72 h at a low temperature of -60 °C with a condenser temperature and a vacuum of 0.2 mbar (20 Pa) to make the broth completely dry and its moisture content not exceeding 5%. The PMB moisture analyser (Adam Equipment Inc., United Kingdom) was used to determine the broth moisture. After the lyophilisation process, the moisture content of the obtained dry broth was determined to be 5%. The broth, which had been removed from the lyophiliser racks, was ground into a powder by grinding equipment and, due to its hygroscopic nature, immediately packed in airtight containers (for storage and disposal) for use in food production. Suitable conditions for storage of the obtained dry broth - a room protected from light and an ambient temperature of 2 - 20 °C.

*The second example.* By analogy with the first example, dry broth powder was obtained. The difference was that the anatomical parts of the cattle were baked in a convection oven at 180 °C for 40 minutes before being boiled in water, and the dry broth powder was mixed with spices until smooth. For 100 g of dry broth powder 1.5 g of natural dried (dehydrated) citric acid granules, 3.0 g of oregano *(Origanum),* 1.0 g dill *(Anethum),* 3.0 g parsley *(Petroselinum),* 2.0 g black pepper (*Piper nigrum*), 3.0 g garlic *(Allium sativum),* 1.0 g cinnamon *(Cinnamomum)* and 3.0 g passion fruit *(Passiflora)* was used.

*The third example.* Organic raw material was used to obtain dry broth: 34% by weight of the anatomical part of organically reared cattle (45% of the knee joints, 35% of the femurs, 20% of the oesophagus), 0.37 % by weight 5% acidity of organic apple cider vinegar and water (H₂O) - the remaining quantity. The technological process is analogous to that described in the first example. The difference was that the lyophilisation process was performed at a low condenser temperature of -85 °C to obtain a dry broth with a moisture content of 4.8%. The difference is that for 100 g of dry broth powder 10 g of sea salt (in the form of flakes), 1.0 g of oregano *(Origanum),* 2.0 g dill *(Anethum),* 4.0 g parsley *(Petroselinum),* 4.0 g green pepper *(Piper nigrum),* 5.0 g garlic (*Allium sativum*), 3.0 g bay leaves *(Laurus nobilis)* and 3.0 g turmeric *(Curcuma)* was used.

*The fourth example.* Organic raw material was used to obtain dry broth: 35% by weight of the anatomical part of organically reared cattle (45% of the knee joints, 45% of the femurs, 10% of the palate), 0.35 % by weight 5% acidity of organic apple cider vinegar and water (H₂O) - the remaining quantity. The technological process is analogous to that described in the first example. The difference is that the lyophilisation process was carried out at a low condenser temperature of -67 °C and a dry broth with a moisture content of 5% was obtained. The difference is that for 100 g of dry broth powder 2.0 g of dill *(Anethum),* 3.0 g white pepper (*Piper nigrum*)*,* 2.0 g red pepper (pepper genus *Capsicum* plants), 1.0 g aniseed goat herb *(Pimpinella anisum)* and 3.0 g ginger *(Zingiber)* was used.

The moisture content of the dry broth obtained in Examples 1 - 4 does not exceed 5%. The moisture content of the dry broth must be up to 5%. Ready-to-use (dissolved and boiled in water) dry broth has good flavour. The dry broth obtained in the second example has an exceptionally good flavour, as the anatomical parts of the cattle are baked in a convection oven (optimal baking mode: duration 30-40 min, temperature 170 - 190 °C) before boiling them in water. According to Examples 2 - 4, natural fragrant dried and crushed spices were used to obtain the dry broth, which gives the broth not only a good, distinctive taste, but also a fresh aroma.

The presented method ensures the production of organic dry broth, whereas the following have been used to obtain it: organic animal raw material (anatomical parts of bovine animals: knee joints, femurs, palate or oesophagus) from an organic livestock farm; organic apple cider vinegar and natural dried and crushed spices. The resulting dry broth has a good taste and contains useful substances for the human body, such as vitamins, collagen (types I - III), amino acids, minerals: calcium, potassium, magnesium, iron, phosphorus, selenium, silicon, etc. Thanks to long cooking, valuable nutrients are extracted from the anatomical parts of cattle into the broth, and one of them, a protein that is especially important for the body - collagen. The optimal lyophilisation process to obtain a dry broth makes it possible to preserve valuable nutrients as well as its very good solubility in water. The natural dried and crushed spices used to make the dry broth not only have a good taste, but also have another important advantage - the benefit to the human body, as they are also rich in vitamins and useful minerals. The packaging of the resulting dry broth in airtight containers makes it possible to preserve its valuable nutritional properties during storage. The resulting dry broth, which has not only nutritional but also good taste properties, is suitable for strengthening immunity and is used as a base for soups, sauces, stews.

## Claims

1. Method for obtaining dry broth from the bones of organically reared cattle, using raw material of animal origin - bones, boiling them in water, filtering the liquid, heating the filtered liquid, increasing its concentration, cooling, **characterized by** that it is obtained from organic raw materials and uses 32-35% by weight of anatomical parts of organically reared cattle, 0.35-0.40% by weight organic 5% acidity of organic apple cider vinegar and water (H₂O) - the remaining quantity and in particular the anatomical parts of the bovine animals are boiled in a container of water for at least two hours at a temperature not exceeding 101 °C by skimming off the top layer of unnecessary substances, then 5% acidity of organic apple cider vinegar added and boil for at least 28 hours at a constant temperature of 93 °C, then the broth is then filtered by separating the anatomical parts of the bovine bones and evaporated by stirring in evaporating vessels with automatic mixing function for at least 10 hours at an evaporation temperature of 99 °C, the evaporated broth is poured into lyophilisation forms in a layer 1.5 - 2.5 cm thick and instantly cooled to 0 °C in a shock freezer, cooled broth for storage at a low temperature of -0 to +4 °C until the lyophilisation process vacuumed in a vacuum package, the broth is placed on the lyophilisation racks without vacuum packaging in a layer not thicker than 2.5 cm and refrigerated at a temperature of not more than -18 °C for at least 24 hours, lyophilisation racks with frozen broth are placed in the lyophiliser for at least 72 hours and lyophilized at a condenser temperature of -60 ° C to -85 °C and a vacuum of at least 20 Pa, after lyophilisation, the broth removed from the lyophilisation racks is ground into a powder.

2. The method for obtaining organic broth from organic cattle according to claim 1 **characterized in that** the anatomical parts of the organic cattle are baked in a convection oven at 170-190 °C for 30-40 minutes before being boiled in water.

3. The method for obtaining organic broth from organic cattle according to claim 1 **characterized in that** the anatomical parts of the organic cattle used are: 35-45 % by weight knee joints, 35-45 % by weight femurs, 10-20 % by weight palate or oesophagus.

4. The method for obtaining organic broth from organic cattle according to claim 1 **characterized in that** the dry broth powder is mixed to a homogeneous mass with natural dried and crushed spices, using 100 g of dry broth powder and spices optionally: oregano *(Origanum)* 1.0 - 3.0 g, dill *(Anethum)* 1.0 - 3.0 g, parsley *(Petroselinum)* 3.0 - 4.0 g, black pepper *(Piper nigrum)* 2.0 - 4.0 g, white pepper *(Piper nigrum)* 2.0 - 4.0 g, green pepper *(Piper nigrum)* 2.0 - 4.0 g, red pepper (pepper genus *Capsicum* plants), 2.0 - 4.0 g, garlic *(Allium sativum)* 3.0 - 5.0 g, bay leaves *(Laurus nobilis)* 1,0 - 3,0 g, aniseed goat herb *(Pimpinella anisum)* 1.0 - 3.0 g, cinnamon *(Cinnamomum)* 1.0 - 3.0 g, passion fruit *(Passiflora)* 1.0 - 3.0 g, ginger *(Zingiber)* 1.0 - 3.0 g, turmeric *(Curcuma)* 1.0 - 3.0 g.

5. The method for obtaining organic broth from organic cattle according to claim 4 **characterized in that** 1.0 to 1.5 g of citric acid, naturally dried (dehydrated), obtained from the fruit of citrus plants (*Citroideae*), in the form of granules or organic acid (C₆H₈O₇) in the form of white bulk crystals, is added to 100 g of dry broth powder.

6. The method for obtaining organic broth from organic cattle according to claim 4 **characterized in that** not more than 15 g of, optionally, table salt (NaCI), sea salt (in the form of crystals or flakes), or Himalayan salt is added per 100 g of dry broth powder.
